# EUROPÄISCHE PATENTANMELDUNG

(11) **EP 1 740 000 A1**
(43) Veröffentlichungstag der Anmeldung: **03.01.2007**
(21) Anmeldenummer: 05013828.8
(22) Anmeldetag: 27.06.2005
(51) Int. Cl.: H04Q 7/38

(54) **Verfahren zur Übergabe einer Funkübertragung durch Sendeleistungssteuerung der Basisstationen**

(71) Anmelder: SIEMENS AKTIENGESELLSCHAFT, 80333 München (DE)
(72) Erfinder: Freisinger, Michael, 1100 Wien (AT)

(57) **Zusammenfassung**

Die Erfindung betrifft ein Verfahren zur Übergabe einer Funkübertragung in einem Funkkommunikationssystem, bei dem eine erste Funkzelle durch eine erste Sendeleistung einer ersten Basisstation, die der ersten Funkzelle zur Funkversorgung zugeordnet ist, bestimmt wird und bei dem eine zweite Funkzelle durch eine zweite Sendeleistung einer zweiten Basisstation, die der zweiten Funkzelle zur Funkversorgung zugeordnet ist, bestimmt wird. Ein Grenzbereich wird durch eine zumindest teilweise Überlagerung der ersten Funkzelle mit der zweiten Funkzelle gebildet, wobei der Grenzbereich durch die erste und die zweite Sendeleistung bestimmt ist. Zur Durchführung von Funkübertragungen werden in der ersten und der zweiten Funkzelle gleiche Frequenzen verwendet. Eine Funkübertragung erfolgt zwischen einer Mobilstation und der ersten Basisstation. Anhand von Messungen wird eine Annäherung der Mobilstation an den Grenzbereich erkannt. Zu einem ersten Zeitpunkt, zu dem die Mobilstation aus der ersten Funkzelle kommend den Grenzbereich erreicht, wird seitens der ersten Basisstation eine Sendeleistungserhöhung auf eine dritte Sendeleistung durchgeführt. Zu einem zweiten Zeitpunkt wird seitens der zweiten Basisstation eine Sendeleistungserhöhung auf eine vierte Sendeleistung durchgeführt, wodurch die Übergabe der Funkübertragung an die zweite Basisstation erfolgt.

## Beschreibung

Die Erfindung betrifft ein Verfahren zur Übergabe einer Funkübertragung in einem Funkkommunikationssystem gemäß dem Oberbegriff des Patentanspruchs 1.

Verfahren zur Übergabe einer Funkübertragung in einem Funkkommunikationssystem bzw. Mobilfunksystem werden im Allgemeinen als "Handover" bezeichnet, wobei zwischen einem so genannten "Hard-Handover"-Verfahren und einem so genannten "Soft-Handover"-Verfahren unterschieden wird.

Beim "Hard-Handover" wird eine Funkverbindung bzw. Funkübertragung, die zwischen einer ersten Basisstation und einer Mobilstation eingerichtet ist, nach Erreichen von vorgegebenen Kriterien unmittelbar von der ersten Basisstation zu einer an der Mobilstation empfangbaren zweiten Basisstation übergeben.

Als vorgegebene Kriterien zur Einleitung eines Handover können beispielsweise ein "carrier-to-interference, C/I"-Wert, oder eine seitens der Mobilstation gemessene Empfangsfeldstärke bzw. Empfangsbedingungen verwendet werden.

Nachteilig erfolgt eine "harte" Entscheidung über eine durchzuführende Verbindungsweitergabe, bei der es auch zu einem vollständigen Abbruch der Funkübertragung kommen kann.

Beim "Soft-Handover" wird bei Erreichen von vorgegebenen Kriterien zusätzlich zu einer ersten Funkübertragung, die zwischen der Mobilstation und der ersten Basisstation eingerichtet ist, eine weitere Funkübertragung zwischen der Mobilstation und einer an der Mobilstation empfangbaren zweiten Basisstation eingerichtet. Erst nachdem die weitere Funkübertragung zur zweiten Basisstation eingerichtet wurde und ein Datenaustausch erfolgt, wird die Funkübertragung zur ersten Basisstation beendet. Vorteilhaft wird beim "Soft Handover" ein abrupter Abbruch von Funkübertragungen vermieden.

Es sind Funkkommunikationssysteme bekannt, bei denen in benachbarten Funkzellen gleiche Frequenzen zur Funkübertragung verwendet werden. Derartige Funkkommunikationssysteme weisen einen als "frequency reuse" bezeichneten Frequenzwiederholungsfaktor von eins auf. Soll in einem Übergangsbereich zwischen einer ersten Funkzelle, die einer ersten Basisstation zugeordnet ist, und einer zweiten Funkzelle, die einer zweiten Basisstation zugeordnet ist, ein Handover erfolgen, so werden die an der Mobilstation in diesem Übergangsbereich empfangenen Signale der ersten Basisstation durch Signale der zweiten Basisstation aufgrund des Frequenzwiederholungsfaktors gestört. Somit werden an den jeweiligen Funkzellgrenzen erhöhte Interferenzen verursacht.

Bei einem derartigen Funkkommunikationssystem kann eine Entscheidung für einen durchzuführenden Handover nur erschwert getroffen werden, so dass eine verminderte Verbindungsqualität und eine erhöhte Abbruchwahrscheinlichkeit von Funkübertragungen besteht.

Es ist daher Aufgabe der vorliegenden Erfindung, für ein Funkkommunikationssystem mit einem "frequency reuse" von eins ein verbessertes Verfahren zur Übergabe einer Funkübertragung anzugeben.

Diese Aufgabe wird durch die Merkmale des Patentanspruchs 1 gelöst. Vorteilhafte Weiterbildungen sind in den Unteransprüchen angegeben.

Beim erfindungsgemäßen Verfahren wird eine erste Funkzelle durch eine erste Sendeleistung einer ersten Basisstation, die der ersten Funkzelle zur Funkversorgung zugeordnet ist, bestimmt. Zugleich wird eine benachbarte zweite Funkzelle durch eine zweite Sendeleistung einer zweiten Basisstation, die der zweiten Funkzelle zur Funkversorgung zugeordnet ist, bestimmt. Die beiden benachbarten Funkzellen überlagern sich zumindest teilweise und bilden einen Grenzbereich, der somit sowohl durch die erste Sendeleistung der ersten Basisstation als auch durch die zweite Sendeleistung der zweiten Basisstation bestimmt wird.
Zur Durchführung von Funkübertragungen werden in der ersten und in der zweiten Funkzelle gleiche Frequenzen verwendet, d.h. es liegt ein "frequency reuse" von eins vor.
Eine Mobilstation ist der ersten Funkzelle zugeordnet, so dass eine Funkübertragung zwischen der Mobilstation und der ersten Basisstation durchgeführt wird.

Erfindungsgemäß wird anhand von Messungen eine Annäherung der Mobilstation an den Grenzbereich erkannt. Zu einem ersten Zeitpunkt, zu dem die Mobilstation aus der ersten Funkzelle kommend den Grenzbereich erreicht, wird seitens der ersten Basisstation eine Sendeleistungserhöhung auf eine dritte Sendeleistung durchgeführt, so dass die Funkverbindung von der ersten Basisstation zur Mobilstation verbessert wird.
Zu einem zweiten Zeitpunkt wird seitens der zweiten Basisstation eine Sendeleistungserhöhung auf eine vierte Sendeleistung durchgeführt, so dass die Übergabe der Funkübertragung an die zweite Basisstation durch eine verbesserte Funkverbindung von der zweiten Basisstation zur Mobilstation erfolgt.

Bevorzugt wird der zweite Zeitpunkt dadurch bestimmt, dass zum zweiten Zeitpunkt die Mobilstation den Grenzbereich in die zweite Funkzelle verlässt.

Bevorzugt wird zum ersten Zeitpunkt die vierte Sendeleistung an der zweiten Basisstation reduziert, so dass störende Interferenzen, die von der zweiten Basisstation an der Mobilstation verursacht werden, ebenfalls reduziert werden.

Bevorzugt wird zum zweiten Zeitpunkt die dritte Sendeleistung an der ersten Basisstation reduziert, so dass störende Interferenzen, die von der ersten Basisstation an der Mobilstation verursacht werden, ebenfalls reduziert werden.

Durch das erfindungsgemäße Verfahren wird eine sichere Übergabe der Mobilstation von der ersten Basisstation zur zweiten Basisstation verwirklicht, die Verbindungsqualität im Grenzbereich verbessert und plötzliche Verbindungsabbrüche vermieden.

Zusammengefasst wird der an sich kritische Grenzbereich, bei dessen Erreichen die Entscheidung zum Handover für die Mobilstation getroffen werden muss, von der Mobilstation bzw. von deren Position durch adaptive Vergrößerung bzw. Verkleinerung der Funkzellen und durch Verschiebung der Funkzellengrenzen entfernt.

Nachfolgend wird die Erfindung anhand einer Zeichnung näher erläutert. Dabei zeigt:
- FIG 1: das erfindungsgemäße Verfahren anhand einer Eisenbahnstrecke,
- FIG 2: bezogen auf FIG 1 das erfindungsgemäße Verfahren mit einer erhöhten Sendeleistung seitens einer ersten Basisstation, und
- FIG 3: bezogen auf FIG 1 und FIG 2 das erfindungsgemäße Verfahren mit einer erhöhten Sendeleistung seitens einer zweiten Basisstation.

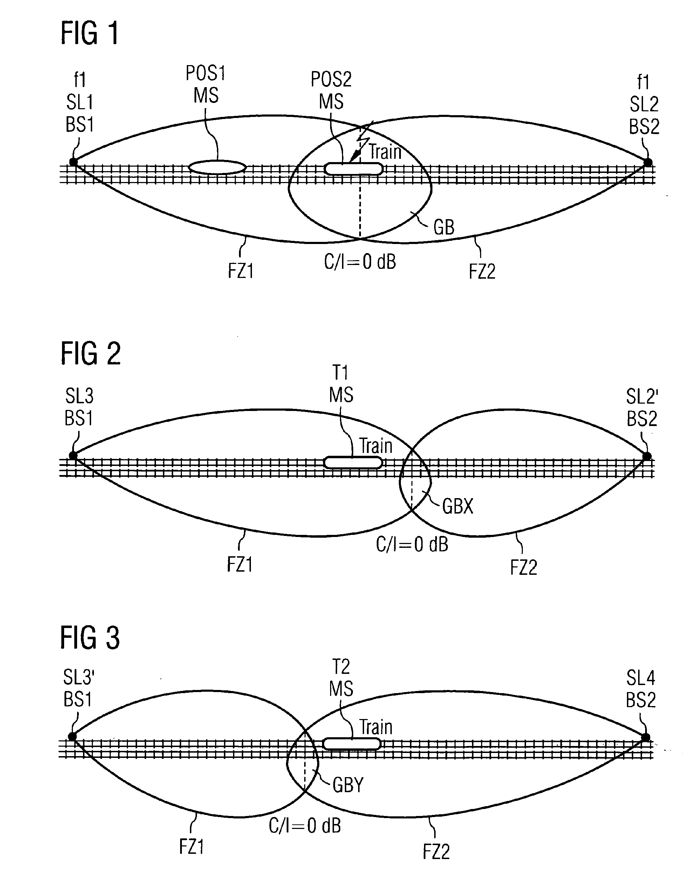

FIG 1 zeigt das erfindungsgemäße Verfahren anhand einer Eisenbahnstrecke.

Eine Funkversorgung einer Eisenbahnstrecke erfolgt über eine erste Funkzelle FZ1 und eine zweite Funkzelle FZ2 unter Verwendung einer Frequenz f1. Dabei ist die erste Funkzelle FZ1 einer ersten Basisstation BS1 und die zweite Funkzelle FZ2 einer zweiten Basisstation BS2 zugeordnet.

Die Ausmaße der ersten Funkzelle FZ1 werden unter anderem durch eine seitens der ersten Basisstation BS1 verwendeten ersten Sendeleistung SL1 bestimmt, während die Ausmaße der zweiten Funkzelle FZ2 durch eine seitens der zweiten Basisstation BS2 verwendeten zweiten Sendeleistung SL2 bestimmt wird.

Die erste Funkzelle FZ1 und die zweite Funkzelle FZ2 überlagern sich zumindest teilweise und bilden einen Grenzbereich GB, der somit sowohl durch die erste Sendeleistung SL1 der ersten Basisstation BS1 als auch durch die zweite Sendeleistung SL2 der zweiten Basisstation BS2 bestimmt wird.

Typischerweise wird der Grenzbereich GB durch ein als "carrier to interference, C/I" bezeichnetes Verhältnis von 0dB bestimmt.

Ein Zug "Train" ist als Mobilstation MS an einer ersten Position POS1 der ersten Funkzelle FZ1 bzw. der ersten Basisstation BS1 zugeordnet, so dass eine Funkübertragung zwischen der Mobilstation MS und der ersten Basisstation BS1 durchgeführt wird.

Die Mobilstation MS nähert sich nun dem Grenzbereich GB von der ersten Position POS1 kommend an und erreicht eine zweite Position POS2 innerhalb des Grenzbereichs GB.

Seitens der Mobilstation MS werden beispielsweise ständig C/I-Werte ermittelt bzw. gemessen und an der zweiten Position POS2 letztlich ein C/I-Wert von 0dB detektiert. Damit erkennt die Mobilstation MS das Erreichen des Grenzbereichs GB und damit die Notwendigkeit einer bevorstehenden Verbindungsübergabe von der ersten Basisstation BS1 an die zweite Basisstation BS2.

Alternativ dazu kann das Erreichen des Grenzbereichs GB auch durch Feldstärkemessungen seitens der ersten Basisstation BS1 erfolgen. Oder das Erreichen des Grenzbereichs GB wird durch eine Positionsbestimmung detektiert.
Das eigentliche Erkennen bzw. die dazugehörige Überwachung kann sowohl seitens der Mobilstation MS als auch seitens der ersten Basisstation BS1 erfolgen.

Zu einem ersten Zeitpunkt T1, zu dem die Mobilstation MS aus der ersten Funkzelle FZ1 kommend den Grenzbereich GB erreicht, wird seitens der ersten Basisstation BS1 eine Sendeleistungserhöhung von der ersten Sendeleistung SL1 auf eine dritte Sendeleistung SL3 durchgeführt.

Diese Situation ist in FIG 2 gezeigt. Durch diese Maßnahme wird die erste Funkzelle FZ1 vergrößert und die Funkverbindung von der ersten Basisstation BS1 zur Mobilstation MS verbessert. Der in FIG 1 dargestellte Grenzbereich GB wird in den in FIG 2 dargestellten Grenzbereich GBX überführt.

Bevorzugt wird zum ersten Zeitpunkt T1 die zweite Sendeleistung SL2 der zweiten Basisstation BS2 auf eine Sendeleistung SL2' reduziert, um störende Interferenzen, die von der zweiten Basisstation BS2 an der Mobilstation MS verursacht werden könnten, zu reduzieren.

Zu einem zweiten Zeitpunkt T2, zu dem beispielsweise die Mobilstation MS den Grenzbereich GB in die zweite Funkzelle FZ2 verlässt, wird seitens der zweiten Basisstation BS2 eine Sendeleistungserhöhung auf eine vierte Sendeleistung SL4 durchgeführt und damit die Übergabe der Funkübertragung an die zweite Basisstation BS2 ermöglicht bzw. eingeleitet. Dadurch erfolgt eine verbesserte Funkverbindung von der zweiten Basisstation BS2 zur Mobilstation MS.

Diese Situation ist in FIG 3 dargestellt.

Bevorzugt wird zum zweiten Zeitpunkt T2 die Sendeleistung der ersten Basisstation BS1 auf eine Sendeleistung SL3' reduziert, um störende Interferenzen, die von der ersten Basisstation BS1 an der Mobilstation MS verursacht werden könnten, ebenfalls zu reduzieren.

Durch die erhöhte vierte Sendeleistung SL4 wird die zweite Funkzelle FZ2 vergrößert und die Funkverbindung von der zweiten Basisstation BS2 zur Mobilstation MS verbessert.

Die in den Figuren FIG 1 und FIG 2 dargestellten Grenzbereiche GB und GBX werden in den in FIG 3 dargestellten verschobenen Grenzbereich GBY überführt und dadurch störende Interferenzen im ursprünglichen Grenzbereich GB vermieden.

Für die in den Figuren FIG 1 bis FIG 3 jeweils dargestellte Situation gilt:
Sendeleistung SL3 > Sendeleistung SL2' (siehe FIG 2),
Sendeleistung SL4 > Sendeleistung SL3' (siehe FIG 3).

Dabei ist es auch möglich, zum ersten Zeitpunkt T1 seitens der zweiten Basisstation BS2 die Sendeleistung SL2 beizubehalten (nicht dargestellt). Dann gilt:
Sendeleistung SL3 > Sendeleistung SL2.

Entsprechend ist es auch möglich, zum zweiten Zeitpunkt T2 seitens der ersten Basisstation BS1 die Sendeleistung SL3 beizubehalten (nicht dargestellt). Dann gilt:
Sendeleistung SL4 > Sendeleistung SL3.

## Patentansprüche

1. Verfahren zur Übergabe einer Funkübertragung in einem Funkkommunikationssystem
- bei dem eine erste Funkzelle (FZ1) durch eine erste Sendeleistung (SL1) einer ersten Basisstation (BS1), die der ersten Funkzelle (FZ1) zur Funkversorgung zugeordnet ist, bestimmt wird,
- bei dem eine zweite Funkzelle (FZ2) durch eine zweite Sendeleistung (SL2) einer zweiten Basisstation (BS2), die der zweiten Funkzelle (FZ2) zur Funkversorgung zugeordnet ist, bestimmt wird,
- bei dem ein Grenzbereich (GB) durch eine zumindest teilweise Überlagerung der ersten Funkzelle (FZ1) mit der zweiten Funkzelle (FZ2) gebildet wird, wobei der Grenzbereich (GB) durch die erste und die zweite Sendeleistung (SL1, SL2) bestimmt ist,
- bei dem zur Durchführung von Funkübertragungen in der ersten und der zweiten Funkzelle (FZ1, FZ2) gleiche Frequenzen (f1) verwendet werden,
- bei dem eine Funkübertragung zwischen einer Mobilstation (MS) und der ersten Basisstation (BS1) erfolgt,
**dadurch gekennzeichnet,**
- **dass** anhand von Messungen eine Annäherung der Mobilstation (MS) an den Grenzbereich (GB) erkannt wird,
- **dass** zu einem ersten Zeitpunkt (T1), zu dem die Mobilstation (MS) aus der ersten Funkzelle (FZ1) kommend den Grenzbereich (GB) erreicht, seitens der ersten Basisstation (BS1) eine Sendeleistungserhöhung auf eine dritte Sendeleistung (SL3) durchgeführt wird, und
- **dass** zu einem zweiten Zeitpunkt (T2) seitens der zweiten Basisstation (BS2) eine Sendeleistungserhöhung auf eine vierte Sendeleistung (SL4) durchgeführt wird, wodurch die Übergabe der Funkübertragung an die zweite Basisstation (BS2) erfolgt.

2. Verfahren nach Anspruch 1, **dadurch gekennzeichnet, dass** die Mobilstation (MS) zum zweiten Zeitpunkt (T2) den Grenzbereich (GB) in die zweite Funkzelle (FZ2) verlässt.

3. Verfahren nach Anspruch 1 oder 2, **dadurch gekennzeichnet, dass** die Annäherung der Mobilstation (MS) an den Grenzbereich (GB) durch ein Positionsbestimmungsverfahren erkannt wird.

4. Verfahren nach Anspruch 3, **dadurch gekennzeichnet, dass** zur Positionsbestimmung ein GPS-gestütztes Ortungsverfahren verwendet wird.

5. Verfahren nach Anspruch 3, **dadurch gekennzeichnet, dass** zur Positionsbestimmung Laufzeitmessungen von Signalen verwendet werden, die zwischen der Mobilstation (MS) und der ersten Basisstation (BS1) ausgetauscht werden.

6. Verfahren nach einem der vorhergehenden Ansprüche, **dadurch gekennzeichnet, dass** zum ersten Zeitpunkt (T1) eine Sendeleistungsreduzierung (SL2') seitens der zweiten Basisstation (BS2) durchgeführt wird.

7. Verfahren nach einem der vorhergehenden Ansprüche, **dadurch gekennzeichnet, dass** zum zweiten Zeitpunkt (T2) eine Sendeleistungsreduzierung (SL3') seitens der ersten Basisstation (BS1) durchgeführt wird.
